# EUROPÄISCHE PATENTSCHRIFT

(11) **EP 0 498 319 B1**
(45) Veröffentlichungstag und Bekanntmachung des Hinweises auf die Patenterteilung: **22.03.1995**
(21) Anmeldenummer: 92101663.0
(22) Anmeldetag: 01.02.1992
(51) Int. Cl.: G21C 7/117

(54) **Verfahren und Anordnung zur Reparatur von Steuerelementen eines Druckwasserreaktors**
Methode and arrangement for repair of a pressure water reactor control cluster
Méthode et arrangement pour la réparation d'une grappe de contrôle d'un réacteur à eau pressurisée

(30) Priorität: 06.02.1991 DE 4103496
(43) Veröffentlichungstag der Anmeldung: 12.08.1992
(73) Patentinhaber: ABB Reaktor GmbH, D-68167 Mannheim (DE)
(72) Erfinder: Hoffmann, Heinz, Dr., W-6141 Einhausen (DE); Skoff, Gerhard, Dr., W-6906 Leimen (DE)
(74) Vertreter: Rupprecht, Klaus, Dipl.-Ing.

(56) Entgegenhaltungen:
- DE-C- 3 337 636
- NUCLEAR TECHNOLOGY. Bd. 60, Nr. 3, März 1983, LA GRANGE PARK, ILLINOIS US Seiten 344 - 351; KENNETH C. RADFORD ET AL.: 'Fabrication, development and application of an annular Al2O3 - B4C burnable absorber'

## Beschreibung

Die Erfindung betrifft ein Verfahren zur Reparatur von Steuerelementen für einen aus mehreren Brennelementen zusammengesetzten Reaktorkern eines Druckwasserreaktors, wobei ein Steuerelement aus einem Träger mit einer Vielzahl dort befestigter Steuerstäbe besteht, die in Führungsrohren eines Brennelementes bewegbar sind.

Ein derartiges Verfahren ist aus der DE-C2 33 37 636 bekannt. Dort wird unter Verwendung einer speziellen Vorrichtung die Befestigungsstelle eines unbrauchbar gewordenen Steuerstabes gelöst, der gelöste Steuerstab entfernt und durch einen neuen Steuerstab ersetzt. Das bekannte Verfahren erfordert aufwendige Vorrichtungen und einen hohen Zeitaufwand, der an der Verfügbarkeit der Kernreaktoranlage verloren geht.

Es stellt sich die Aufgabe, ein Verfahren der eingangs genannten Art anzugeben, das mit einem reduzierten Zeit- und Vorrichtungsaufwand auskommt.

Gelöst wird diese Aufgabe erfindungsgemäß dadurch, daß bei einem Reaktorkern mit einer minimal geforderten Abschaltmarge und einer zusätzlichen, darüber hinausgehenden Abschaltreserve die unbrauchbar gewordenen Steuerstäbe entfernt werden und die damit verbundene Verminderung der Abschaltreaktivität aus dieser Abschaltreserve kompensiert wird.

In der Regel beträgt die Abschaltreserve etwa 1 bis 2 % Δρ die durch fehlende Steuerstäbe noch aufgebraucht werden kann. Bei Ausnutzung nur eines Teiles dieses Potentials führt der gegenüber dem Stand der Technik andere Weg zu den erwünschten Reduzierungen von Zeit- und Vorrichtungsaufwand. Auch entfällt durch das fehlende Einführen eines Ersatzstabes die Entwicklung eines mechanischen Sicherungskonzeptes für die Befestigungsmutter. Eine Schweißsicherung dieser Mutter bedeutet einen noch größeren apparativen Aufwand, da diese - aus sicherheitstechnischen Gründen - entweder unter Wasser oder in einer abgeschirmten Glocke ausgeführt werden muß.

Der Verlust an Marge läßt sich verringern, wenn die reparierten Steuerelemente in Kernregionen eingesetzt sind, die nur in geringerem Umfang zur Gesamtwirksamkeit aller Steuerelemente beitragen. Dies können Abschaltpositionen sein, oder solche Positionen, die geringste Verluste an Abschaltreaktivität gewährleisten.

Eine bevorzugte Anordnung sieht vor, daß die reparierten Steuerelemente gleichmäßig über den Kernquerschnitt verteilt eingesetzt sind. Diese Steuerelemente mit einer Multiplizität von 2 bzw. 4 sollen an symmetrischen Positionen im Kern eingesetzt werden, um durch den Verlust an Wirksamkeit möglichst keine Asymmetrie zu erzeugen.

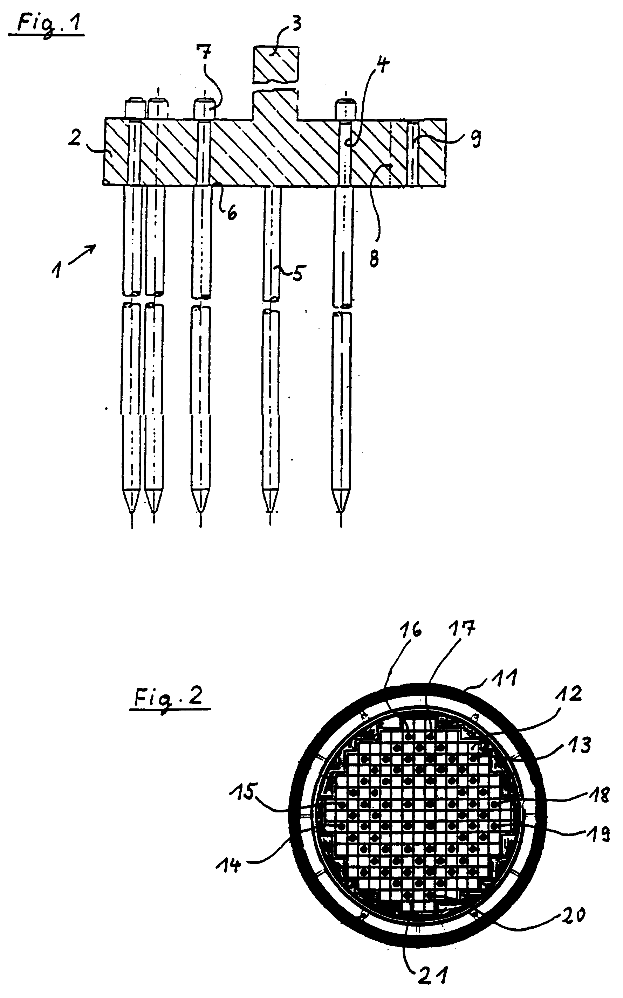

Anhand eines Ausführungsbeispiels und der schematischen Figuren 1 und 2 wird das erfindungsgemäße Verfahren sowie eine Anordnung der nach dem Verfahren reparierten Steuerelemente erläutert.

Dabei zeigt die
- Figur 1: einen Schnitt durch den Träger mit einem Teil der Steuerstäbe und
- Figur 2: einen Querschnitt durch einen Reaktordruckbehälter mit dem darin angeordneten Reaktorkern in einem anderen Maßstab.

Die Figur 1 zeigt ein Steuerelement 1, dessen Träger 2 einen Zapfen 3 zur Verbindung mit einem nicht dargestellten Antrieb aufweist. Der Träger ist mit Bohrungen 4 versehen, die jeweils das Kopfende eines Steuerstabes 5 aufnehmen. Der Steuerstab liegt mit einer Schulter 6 an der Trägerunterseite an und erhält mit einer an die Trägeroberseite angelegten Mutter 7 seine Festlegung relativ zum Träger 2. Eine nicht dargestellte Schweißsicherung unterbindet ein unerwünschtes Lösen der Mutter. Mit Hilfe des nicht dargestellten Antriebes ist der Träger mit den Steuerstäben in Achsrichtung bewegbar, wobei die Steuerstäbe in Führungsrohre eines Brennelementes einfahren können. Die Stabpositionen 8 und 9 waren mit unbrauchbar gewordenen Steuerstäben besetzt, die entfernt wurden. Es sind demnach nur Werkzeuge zum Lösen der Schweißsicherung und zum Aufdrehen der Mutter notwendig, hingegen sind Werkzeuge zum Einsetzen und Befestigen eines Ersatzstabes nicht erforderlich.

Die in einem kleineren Maßstab dargestellte Figur 2 zeigt einen in einem Reaktordruckbehälter 11 angeordneten Reaktorkern. Er besteht aus einer Vielzahl von Brennelementen 12, von welchen etwa jedes Dritte ein Steuerelement 13 aufnimmt. Sind beispielsweise acht Steuerelemente durch Entfernen der unbrauchbar gewordenen Steuerstäbe reparariert worden, so werden sie gleichmäßig über den Kernquerschnitt verteilt in Kernregionen eingesetzt, in denen ein möglichst geringer Verlust an Abschaltreaktivität gewährleistet wird. Diese Positionen können je nach Beladeplan und Kernaufbau verschieden sein. Bei dem Ausführungsbeispiel sind dies die Positionen 14 bis 21.

## Patentansprüche

1. Verfahren zur Reparatur von Steuerelementen (13) für einen aus mehreren Brennelementen (12) zusammengesetzten Reaktorkern eines Druckwasserreaktors, wobei ein Steuerelement (1) aus einem Träger (2) mit einer Vielzahl dort befestigter Steuerstäbe (5) besteht, die in Führungsrohren eines Brennelementes bewegbar sind, dadurch gekennzeichnet, daß bei dem Reaktorkern mit einer minimal geforderten Abschaltmarge und einer zusätzlichen, darüber hinausgehenden Abschaltreserve die unbrauchbar gewordenen Steuerstäbe (5) entfernt werden und die damit verbundene Verminderung der Abschaltreaktivität aus der Abschaltreserve kompensiert wird.

2. Anordnung von reparierten Steuerelementen nach dem Verfahren gemäß Anspruch 1 in einem Reaktorkern, dadurch gekennzeichnet, daß die reparierten Steuerelemente (14 bis 21) in Kernregionen eingesetzt sind, die nur in geringerem Umfang zur Gesamtwirksamkeit aller Steuerelemente beitragen.

3. Anordnung nach Anspruch 2, dadurch gekennzeichnet, daß die reparierten Steuerelemente gleichmäßig über den Kernquerschnitt verteilt eingesetzt sind.

## Claims

1. Method of repairing control elements (13) for a reactor core, composed of a plurality of fuel elements (12), of a pressurized water reactor, wherein a control element (1) consists of a carrier (2) having a multiplicity of control rods (5) fastened in it and movable in guide tubes of a fuel element, characterized in that in the case where the reactor core has a minimum required shutdown margin and an additional shutdown reserve going beyond the latter, the control rods (5) which have become unserviceable are removed and the resulting reduction of shutdown reactivity is made good from the shutdown reserve.

2. Arrangement of control elements repaired by the method according to Claim 1 in a reactor core, characterized in that the repaired control elements (14 to 21) are inserted in regions of the core which contribute only to a lesser extent to the total activity of all the control elements.

3. Arrangement according to Claim 2, characterized in that the repaired control elements are inserted in a uniform distribution over the cross-section of the core.

## Revendications

1. Procédé de réparation d'éléments de contrôle (13) pour le coeur, composé de plusieurs éléments combustibles (12), d'un réacteur à eau sous pression, un élément de contrôle (1) se composant d'un support (2) et d'une multitude de barres de contrôle (5) qui sont fixées à ce support et sont déplaçables dans des tubes-guides d'un élément combustible, caractérisé par le fait que dans le coeur de réacteur présentant une marge d'anti-réactivité minimale requise et une réserve d'anti-réactivité supplémentaire, les barres de contrôle (5) devenues inutilisables sont enlevées et la baisse consécutive d'anti-réactivité est compensée à partir de la réserve d'anti-réactivité.

2. Agencement d'éléments de contrôle réparés suivant le procédé de la revendication 1 dans un coeur de réacteur, caractérisé par le fait que les éléments de contrôle (14, 21) réparés sont insérés dans des zones du coeur qui ne contribuent que dans une mesure réduite à l'efficacité totale de tous les éléments de contrôle.

3. Agencement suivant la revendication 2, caractérisé par le fait que les éléments de contrôle réparés sont insérés en étant répartis uniformément sur la section du coeur.
